# EUROPÄISCHE PATENTSCHRIFT

(11) **EP 1 121 329 B1**
(45) Veröffentlichungstag und Bekanntmachung des Hinweises auf die Patenterteilung: **05.02.2003**
(21) Anmeldenummer: 99969399.7
(22) Anmeldetag: 17.09.1999
(51) Int. Cl.: C02F 1/461, C02F 1/20, B01D 19/00

(54) **AUFBEREITUNGSSYSTEM UND VERFAHREN ZUR VERMINDERUNG DES SAUERSTOFFGEHALTS VON IN EINEM TEILSYSTEM EINER TECHNISCHEN ANLAGE GEFÜHRTEN WASSER**
TREATMENT SYSTEM AND METHOD FOR REDUCING THE OXYGEN CONTENT OF THE WATER OF A PARTIAL SYSTEM OF AN INDUSTRIAL PLANT
SYSTEME DE PREPARATION ET PROCEDE DE REDUCTION DE LA TENEUR EN OXYGENE DE L'EAU CIRCULANT DANS UN SYSTEME PARTIEL D'UNE INSTALLATION INDUSTRIELLE

(30) Priorität: 18.09.1998 DE 19842930
(43) Veröffentlichungstag der Anmeldung: 08.08.2001
(73) Patentinhaber: Framatome ANP GmbH, 91050 Erlangen (DE)
(72) Erfinder: PUTHAWALA, Anwer, D-91054 Buckenhof (DE)
(74) Vertreter: Tergau & Pohl Patentanwälte
(86) Internationale Anmeldenummer: DE9902949
(87) Internationale Veröffentlichungsnummer: WO00017110

(56) Entgegenhaltungen:
- US-A- 4 527 626
- US-A- 5 190 627
- US-A- 5 447 640

## Beschreibung

Die Erfindung betrifft ein Aufbereitungssystem sowie ein Verfahren zur Verminderung des Sauerstoffgehalts von in einem Teilsystem einer technischen Anlage geführtem Wasser.

In einer Vielzahl von technischen Anlagen, beispielsweise in chemischen Produktionsstätten oder auch in nuklear oder fossil betriebenen Kraftwerksanlagen, sind Teilsysteme vorgesehen, in denen Wasser geführt wird. Bei einem derartigen Teilsystem kann es sich beispielsweise um einen Kühlkreislauf oder auch um einen Umlaufkreis für ein Arbeitsmedium handeln.

Eine hohe Sauerstoffkonzentration im in dem Teilsystem geführten Wasser kann dabei zur Korrosion von Einbauteilen oder von Rohren des Teilsystems führen. Um Beschädigungen des Teilsystems oder auch der gesamten technischen Anlage zuverlässig zu vermeiden, kann daher eine bedarfsweise Verminderung des Sauerstoffgehalts des in dem Teilsystem geführten Wassers erforderlich sein. Dieses Erfordernis kann insbesondere dann auftreten, wenn aus betrieblichen oder konzeptionellen Gründen eine andauernde Beaufschlagung des Wassers mit Sauerstoff stattfindet.

Beispielsweise kann für den Zwischenkühlkreislauf einer kerntechnischen Anlage ein Ausgleichsbehälter für das im Zwischenkühlkreislauf geführte Wasser erforderlich sein, in dessen Innerem das Wasser in der Art einer offenen Anordnung mit Umgebungsatmosphäre in Kontakt tritt. Der dadurch bedingte kontinuierliche Sauerstoffeintrag in den Zwischenkühlkreislauf kann zu einer Sauerstoffkonzentration im dort geführten Wasser von beispielsweise bis zu 8 ppm (parts per million) führen. Aus Korrosionsschutzgründen kann es jedoch erforderlich sein, trotz des kontinuierlichen Sauerstoffeintrags den Sauerstoffgehalt im im Zwischenkühlkreislauf geführten Wasser dauerhaft auf einem Wert von weniger als 20 ppb (parts per billion) zu halten.

Dazu ist bei einem derartigen Zwischenkühlkreislauf einer kerntechnischen Anlage üblicherweise eine bedarfsweise Bespeisung des dort geführten Wassers mit Hydrazin (N₂H₄) vorgesehen. Dieses reagiert mit dem im Wasser enthaltenen Sauerstoff unter Bildung von Stickstoff (N₂) und Wasser (H₂O), so dass der Sauerstoffgehalt des Wassers signifikant abgesenkt wird. Gerade bei einer Anlage mit andauerndem Sauerstoffeintrag ist dabei jedoch eine mehr oder weniger dauerhafte Zugabe von Hydrazin erforderlich, so dass mehr und mehr Stickstoff im Wasser gebildet wird. Dies führt zu einem kontinuierlichen Anstieg der Leitfähigkeit des Wassers und somit zu einer dauerhaften Veränderung der Wasserchemie. Aus betrieblichen Gründen ist dabei bei Überschreitung vorgegebener Leitfähigkeitsgrenzen oder bei Überschreitung eines vorgegebenen pH-Werts ein vollständiger Austausch des im jeweiligen Teilsystem der technischen Anlage geführten Wassers erforderlich. Gerade bei komplexen technischen Anlagen ist ein derartiger vollständiger Wasseraustausch sehr aufwendig und zudem mit unerwünschten langen Stillstandszeiten der Anlage verbunden.

Alternativ kann zur Einstellung eines niedrigen Sauerstoffgehalts im Wasser eine bedarfsweise Vakuumentgasung des Wassers vorgesehen sein. Ein derartiges Konzept ist jedoch insbesondere im Hinblick auf die erforderlichen Komponenten mit hohem Aufwand verbunden.

US-A-4 527 626 und US-A-5 447 640 beschreiben die Entfernung von Sauerstoff aus Wasser durch katatytische Reduktion mit Wasserstoff, wobei der Wasserstoff in einer Elektrolysezelle erzeugt wird.

Der Erfindung liegt daher die Aufgabe zugrunde, ein Aufbereitungssystem zur Verminderung des Sauerstoffgehalts von in einem Teilsystem einer technischen Anlage geführtem Wasser anzugeben, das mit besonders geringem baulichem und technischem Aufwand eine zuverlässige bedarfsweise Einstellung des Sauerstoffgehalts im Wasser unterhalb eines vorgebbaren Grenzwerts ermöglicht. Zudem soll ein besonders zuverlässiges und mit besonders geringem Aufwand durchführbares Verfahren zur Verminderung des Sauerstoffgehalts von in einem Teilsystem einer technischen Anlage geführtem Wasser angegeben werden.

Bezüglich des Aufbereitungssystems wird diese Aufgabe erfindungsgemäß gelöst, indem einer an das Teilsystem zur Zersetzung von Wasser in Wasserstoff und Sauerstoff angeschlossenen Anode und Kathode einer eine Anzahl von Membranelektrolysezellen umfassenden Elektrolyseeinheit wasserstoffseitig ein in das Teilsystem geschalteter Wasserstoff-Sauerstoff-Rekombinationskatalysator nachgeschaltet ist, wobei ein zur Vorgabe eines Stromstellwertes für die Elektrolyseeinheit vorgesehener Stellwertgeber eingangsseitig mit einer Messsonde zur Ermittlung des Sauerstoffgehalts des der Elektrolyseeinheit zuströmenden Wassers verbunden ist.

Bei einer derartigen Membranelektrolysezelle wird das Funktionsprinzip einer Brennstoffzelle, wie sie beispielsweise aus dem Aufsatz "Brennstoffzellen für Elektrotraktion", K. Straßer, VDI-Berichte, Nr. 912 (1992), Seite 125 ff, bekannt ist, umgekehrt. Dazu wird einer zwischen einer Anode und einer Kathode angeordneten Membran Wasser zugeführt. Durch Anlegen einer Versorgungsspannung zwischen der Anode und der Kathode wird das Wasser elektrolytisch in Wasserstoff und Sauerstoff zersetzt. Eine derartige Membranelektrolysezelle zeichnet sich durch eine besonders kompakte Bauweise aus, so dass eine Elektrolyseeinheit mit einer Anzahl von Membranelektrolysezellen auf besonders engem Raum untergebracht sein kann. Daher kann eine derartige Elektrolyseeinheit besonders flexibel und an die spezifischen Bedürfnisse des Teilsystems angepasst in das Teilsystem geschaltet sein.

Die Erfindung geht weiterhin von der Überlegung aus, dass eine zuverlässige Einstellung eines geringen Sauerstoffgehalts im Wasser mit besonders geringem Aufwand ermöglicht ist, indem der Sauerstoff einer Reaktion unterzogen wird, deren Produkte die Wasserchemie nicht nachteilig verändern. Dazu ist eine Rekombination des Sauerstoffs mit Wasserstoff vorgesehen, bei der als Endprodukt lediglich Wasser entsteht. Die Bespeisung mit Wasserstoff als Reaktionspartner für den Sauerstoff erfolgt dabei bedarfsweise über die Elektrolyseeinheit, der zur Gewährleistung einer vollständigen Umsetzung des eingespeisten Wasserstoffs der Wasserstoff-Sauerstoff-Rekombinationskatalysator nachgeschaltet ist.

Die Messsonde, die in das Teilsystem oder auch in die Zweigleitung geschaltet sein kann, ermöglicht dabei eine bedarfsgerechte und somit besonders präzise wirkende Erzeugung des zur Verminderung des Sauerstoffgehalts vorgesehenen Wasserstoffs. Der Stellwertgeber wirkt dabei vorteilhafterweise auf eine zur Spannungsversorgung der Elektrolyseeinheit vorgesehene Spannungsquelle. Somit kann die Erzeugung des Wasserstoffs anhand eines Istwerts des Sauerstoffgehalts im Wasser und daher besonders bedarfsgerecht durchgeführt werden.

Zweckmäßigerweise ist die Elektrolyseeinheit zur Zersetzung einer Teilmenge des im Teilsystem geführten Wassers vorgesehen und dazu eingangsseitig ebenfalls an das Teilsystem angeschlossen. Dabei ist Anode und Kathode der Elektrolyseeinheit Wasser aus dem Teilsystem zuführbar. Unter Anode und Kathode sind auch mehrere Anoden und Kathoden zu verstehen. Die Elektrolyseeinheit kann - insbesondere zum Ausgleich von Volumenverlusten - dabei zusätzlich mit Wasser aus einem separaten Wasservorrat bespeisbar sein, in dem das Wasser beispielsweise als Deionat vorgehalten sein kann.

Der Wasserstoff-Sauerstoff-Rekombinationskatalysator umfasst dabei in besonders vorteilhafter Ausgestaltung als katalytisch aktive Komponenten eine Anzahl von mit einer Palladiumschicht versehenen Polymerkugeln, wie sie beispielsweise im Prospekt der Firma Bayer "Katalytische Entfernung von gelöstem O₂ aus Wasser", Nr. OC/I 20 377, Ausgabe Oktober 1995, beschrieben sind.

Weiterhin ist in vorteilhafter Ausgestaltung an die Elektrolyseeinheit ein Ableitungssystem für Sauerstoff angeschlossen. Somit kann der bei der Zersetzung der Teilmenge des Wassers entstehende Sauerstoff auf besonders einfache Weise abgeführt oder einer anderen Verwendung zugeführt werden.

Vorteilhafterweise ist die Elektrolyseeinheit in eine eingangsseitig und ausgangsseitig an das Teilsystem angeschlossene Zweigleitung geschaltet. Dabei ist der durch die Zweigleitung geführte Teilstrom des Wassers und somit die Bespeisung der Elektrolyseeinheit mit zu zersetzendem Wasser besonders flexibel an die zu generierende Wasserstoffmenge anpassbar, ohne dass signifikante Beeinträchtigungen des im Teilsystem zirkulierenden Hauptwasserstroms auftreten. Insbesondere aufgrund der hohen Effektivität bei der elektrolytischen Zersetzung der Teilmenge des Wassers kann dabei das Verzweigungsverhältnis zwischen dem durch die Zweigleitung geführten Teilstrom und dem im Teilsystem geführten Hauptstrom des Wassers vergleichsweise klein gewählt sein. Zur Verminderung des Sauerstoffgehalts von in einem Zwischenkühlkreislauf einer kerntechnischen Anlage geführten Wasser von etwa 8 ppm auf weniger als etwa 10 ppb kann dabei vorgesehen sein, bei einem im Zwischenkühlkreislauf geführten Wasserstrom von beispielsweise etwa 300 Litern pro Stunde lediglich einen Teilstrom von etwa 10 Litern pro Stunde über die Zweigleitung zu führen.

Um bei einer derartigen Anordnung eine besonders homogene Verteilung des erzeugten Wasserstoffs im Hauptstrom des Wassers und somit einen besonders hohen Wirkungsgrad bei der anschließenden katalytischen Rekombination zu erreichen, mündet die Zweigleitung in weiterer vorteilhafter Ausgestaltung ausgangsseitig in einem statischen Durchmischer in das Teilsystem.

Um die Wirksamkeit der katalytischen Rekombination und somit der Verringerung des Sauerstoffgehalts zuverlässig zu überprüfen, ist dem Wasserstoff-Sauerstoff-Rekombinationskatalysator vorteilhafterweise im Teilsystem eine weitere Messsonde zur Ermittlung des Sauerstoffgehalts des Wassers nachgeschaltet.

Bezüglich des Verfahrens wird die oben genannte Aufgabe erfindungsgemäß gelöst, indem Wasser aus dem Teilsystem elektrolytisch in Wasserstoff und Sauerstoff zersetzt wird, wobei der dabei erzeugte Wasserstoff zur Rekombination von im Wasser enthaltenem Sauerstoff herangezogen wird und wobei die elektrolytische Zersetzung der Teilmenge des Wassers aus dem Teilsystem anhand eines den Sauerstoffgehalt des der Elektrolyseeinheit zuströmenden Wassers charakterisierenden Messwerts gesteuert wird. Insbesondere wird eine Teilmenge des Wassers aus dem Teilsystem zersetzt. Das Wasser aus dem Teilsystem wird dabei sowohl der Anode als auch der Kathode der Elektrolyseeinheit zugeführt.

Insbesondere wird dazu Wasser aus dem Teilsystem abgezweigt, über eine Elektrolyseeinheit geleitet und zusammen mit durch Zersetzung des Wassers erzeugtem Wasserstoff in das Teilsystem rückgespeist, wobei in der Elektrolyseeinheit soviel Wasserstoff erzeugt wird, wie zur Rekombination des im Wasser des Teilsystems enthaltenen und durch den Messwert charakterisierten Sauerstoffs benötigt wird.

Die mit der Erfindung erzielten Vorteile bestehen insbesondere darin, dass durch die Bespeisung des Wassers mit Wasserstoff und durch die anschließende katalytische Rekombination eine zuverlässige Verminderung des Sauerstoffgehalts im Wasser gewährleistet ist, wobei auch im Dauerbetrieb eine Veränderung der Wasserchemie sicher vermieden ist. Durch die bedarfsgerechte Erzeugung des Wasserstoffs in der Elektrolyseeinheit ist zudem mit einfachen Mitteln eine Zuführung des Wasserstoffs in das Teilsystem sichergestellt, ohne dass hierfür aufwendige Maßnahmen zur Vorhaltung eines Wasserstoffvorrats erforderlich wären. Eine Korrosion von in das Teilsystem geschalteten Komponenten ist somit mit besonders einfachen Mitteln sicher vermieden, wobei insbesondere auch ein häufiger vollständiger Austausch des im Teilsystem geführten Wassers nicht erforderlich ist.

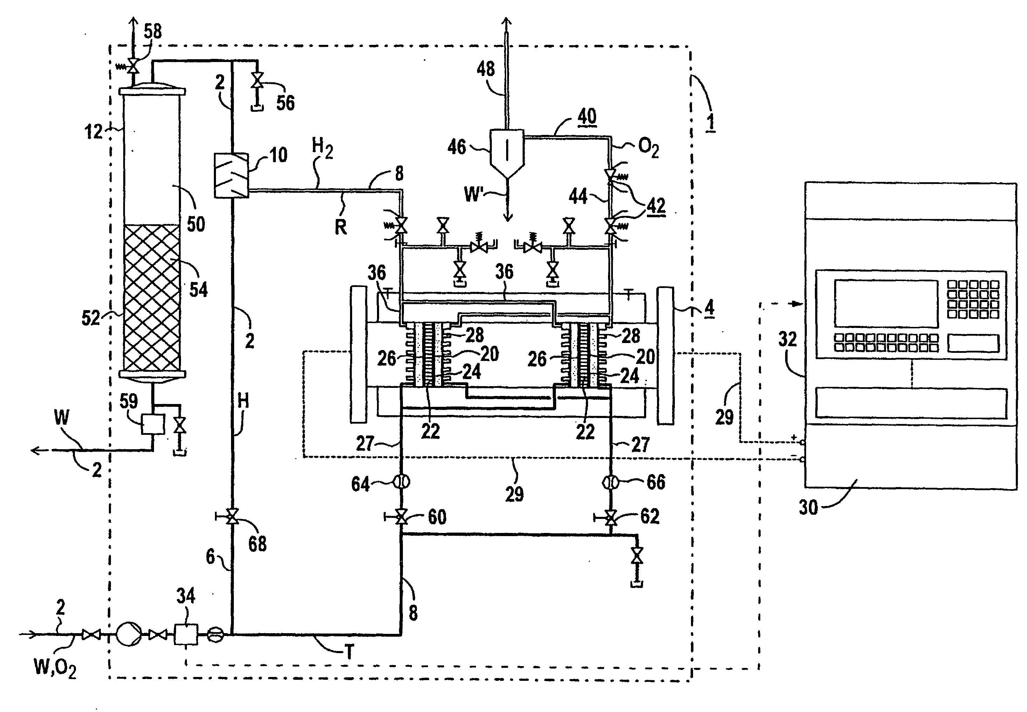

Ein Ausführungsbeispiel der Erfindung wird anhand einer Zeichnung näher erläutert. Darin zeigt die Figur ein Aufbereitungssystem für in einem Teilsystem einer technischen Anlage geführtes Wasser.

Das Aufbereitungssystem 1 gemäß der Figur ist zur Verminderung des Sauerstoffgehalts von in einem auszugsweise dargestellten Teilsystem 2 einer technischen Anlage geführtem Wasser W vorgesehen. Im Ausführungsbeispiel ist das Teilsystem 2 ein Zwischenkühlkreislauf einer kerntechnischen Anlage. Es kann sich beim Teilsystem 2 aber auch um ein beliebiges anderes Teilsystem einer technischen Anlage handeln, bei dem aus verschiedenen Gründen - beispielsweise zum Korrosionsschutz oder zur Einhaltung eines vorgegebenen Sauerstoff-Grenzwerts - eine Verminderung des Sauerstoffgehalts erforderlich oder wünschenswert ist.

Das Aufbereitungssystem 1 umfasst eine Elektrolyseeinheit 4, die in eine von einer Rohrleitung 6 des Teilsystems 2 abzweigende Zweigleitung 8 geschaltet ist. Über die Zweigleitung 8 ist der Elektrolyseeinheit 4 ein Teilstrom T des im Teilsystem 2 geführten Wassers W zuführbar. Zusätzlich kann der Elektrolyseeinheit 4 aber auch Wasser aus einem nicht näher dargestellten Wasservorrat, beispielsweise als Deionat, zuführbar sein. Die Elektrolyseeinheit 4 ist zur Zersetzung einer Teilmenge des Teilstroms T und somit des Wassers W in Wasserstoff H₂ und in Sauerstoff O₂ vorgesehen. Die Elektrolyseeinheit 4 ist dabei ausgangsseitig derart in die Zweigleitung 8 geschaltet, dass der bei der Zersetzung gewonnene Wasserstoff H₂ gemeinsam mit dem in der Elektrolyseeinheit 4 nicht zersetzten Restwasser R dem Teilsystem 2 zuführbar ist.

Eingangsseitig kann der Elektrolyseeinheit 4 ein nicht näher dargestelltes Filtersystem in der Zweigleitung 8 vorgeschaltet sein. Über ein derartiges Filtersystem kann der Zustrom von für die Funktionsfähigkeit der Elektrolyseeinheit 4 schädlichen Ballast- oder Verunreinigungsstoffen in die Elektrolyseeinheit 4 wirksam unterbunden sein.

Die Zweigleitung 8 mündet ausgangsseitig in einem statischen Durchmischer 10 in das Teilsystem 2 ein. In Strömungsrichtung des Wassers W gesehen nach dem statischen Durchmischer 10 ist in das Teilsystem 2 ein Wasserstoff-Sauerstoff-Rekombinationskatalysator 12 geschaltet. Mit anderen Worten: Der Wasserstoff-Sauerstoff-Rekombinationskatalysator 12 ist der Elektrolyseeinheit 4 über die Zweigleitung 8 und über den statischen Durchmischer 10 wasserstoffseitig nachgeschaltet.

Die Elektrolyseeinheit 4 umfasst eine Anzahl von Membranelektrolysezellen 20. Im Ausführungsbeispiel gemäß der Figur sind zwei Membranelektrolysezellen 20 dargestellt. Alternativ können aber auch lediglich eine Membranelektrolysezelle 20 oder auch mehrere Membranelektrolysezellen 20 vorgesehen sein. Bei jeder Membranelektrolysezelle 20 ist eine Membran 22 aus einem polymeren Elektrolyt zwischen einer Anode 24 und einer Kathode 26 angeordnet. Für eine besonders hohe Resistenz gegen Korrosion bestehen die Anoden 24 und die Kathoden 26 vorzugsweise aus Edelmetall wie Platin und/oder Iridium. Es können aber auch andere Materialien vorgesehen sein.

Zur Zuführung von Wasser W zu den Membranelektrolysezellen 20 verzweigt sich die Zweigleitung 8 in eine entsprechende Anzahl von Zuleitungen 27, von denen jede jeweils in ein Wasser-Kanalsystem 28 der zugehörigen Membranelektrolysezelle 20 mündet.

Die Anoden 24 und die Kathoden 26 sind über ein elektrisches Leitungssystem 29 mit einer Spannungsquelle 30 verbunden. Die Spannungsquelle 30 ist zur Steuerung der Wasserstoff- und Sauerstoffproduktion in der Elektrolyseeinheit 4 mit einem Stellwertgeber 32 für die Elektrolyseeinheit 4 verbunden, der seinerseits eingangsseitig mit einer in das Teilsystem 2 geschalteten Messsonde 34 zur Ermittlung des Sauerstoffgehalts des Wassers W verbunden ist.

Zur Einspeisung des Wasserstoffs H₂ in das Teilsystem 2 ist jede Membranelektrolysezelle 20 ausgangsseitig an eine Wasserstoffleitung 36 angeschlossen. Die Wasserstoffleitungen 36 sind an geeigneter Stelle zusammengeführt und bilden gemeinsam den ausgangsseitigen Teil der Zweigleitung 8.

Sauerstoffseitig ist an die Elektrolyseeinheit 4 ausgangsseitig ein Ableitungssystem 40 für den Sauerstoff O₂ angeschlossen. Das Ableitungssystem 40 umfasst eine durch eine Ventilanordnung 42 absperrbare Sauerstoffleitung 44, die in einen Wasserabscheider 46 mündet. Im Wasserabscheider 46 abgeschiedenes Wasser W' ist einem Wassersumpf und somit einer möglichen Wiederverwendung zuführbar. Der im Wasserabscheider 46 vom Wasser W' getrennte Sauerstoff O₂ ist über eine Entlüftungsleitung 48 einem nicht näher dargestellten Entlüftungssystem zuführbar.

Der der Elektrolyseeinheit 4 wasserstoffseitig nachgeschaltete Wasserstoff-Sauerstoff-Rekombinationskatalysator 12 umfasst ein Katalysatorrohr 50, das beispielsweise bei einer Verwendung des Aufbereitungssystems 1 für einen Zwischenkühlkreislauf einer kerntechnischen Anlage eine Höhe von etwa 2 m und einen Durchmesser von etwa 0,4 m aufweist. Im Katalysatorrohr 50 sind in einem unteren Bereich 52 Katalysatorkörper 54 angeordnet, die im Ausführungsbeispiel aus mit Palladium dotierten Polymerkugeln bestehen. Der Wasserstoff-Sauerstoff-Rekombinationskatalysator 12 ist zudem an ein Entlüftungs- und Probennahmeventil 56 sowie an ein Überströmventil 58 angeschlossen.

Zur Einstellung eines vorgebbaren Verzweigungsverhältnisses zwischen dem die Zweigleitung 8 durchströmenden Teilstrom T und dem die Rohrleitung 6 durchströmenden Hauptstrom H des Wassers W sind in die in die Zuleitungen 27 verzweigte Zweigleitung 8 Ventile 60, 62 sowie Durchflussmesseinrichtungen 64, 66 und in die Rohrleitung 6 ein weiteres Ventil 68 geschaltet. Je nach Systemanforderungen kann dabei das Verzweigungsverhältnis derart gewählt sein, dass bei einem die Rohrleitung 6 durchströmenden Hauptstrom H von etwa 300 l/h der die Zweigleitung 8 durchströmende Teilstrom lediglich etwa 10 l/h beträgt.

In Strömungsrichtung des Wassers W gesehen nach dem Wasserstoff-Sauerstoff-Rekombinationskatalysator 12 ist in das Teilsystem 2 eine weitere Messsonde 59 zur Ermittlung des Sauerstoffgehalts des Wassers W geschaltet.

Beim Betrieb des Teilsystems 2 der technischen Anlage wird über die Messsonde 34 der Sauerstoffgehalt des im Teilsystem 2 geführten Wassers W überwacht. Falls dieser Sauerstoffgehalt einen vorgebbaren Grenzwert von beispielsweise 2 ppm überschreitet, wird das Aufbereitungssystem 1 zur Verminderung des Sauerstoffgehalts im Wasser W aktiviert. Dazu wird der Elektrolyseeinheit 4 über die Zweigleitung 8 der Teilstrom T des Wassers W zugeführt. Durch Anlegen einer Spannung über die Spannungsquelle 30 wird eine Teilmenge des der Elektrolyseeinheit 4 zugeführten Wassers W elektrolytisch in Wasserstoff H₂ und in Sauerstoff O₂ zersetzt. Die Zersetzungsrate ist dabei abhängig von dem der Elektrolyseeinheit 4 zugeführten Strom, der wiederum von dem Stellwertgeber 32 abhängig von einem den durch die Messsonde 34 ermittelten Sauerstoffgehalt im Wasser W charakterisierenden Messwert eingestellt wird. Durch eine geeignete Parameterwahl ist dabei eine dosierte Zersetzung von Wasser W in Wasserstoff H₂ und Sauerstoff O₂ derart möglich, dass innerhalb vorgebbarer Toleranzgrenzen exakt die erforderliche Menge an Wasserstoff H₂ zur Rekombination des im Wasser W unerwünschten Sauerstoffs O₂ bereitgestellt wird.

Der durch die Zersetzung der Teilmenge des Wassers W erzeugte Wasserstoff H₂ wird zusammen mit nicht zersetztem Restwasser R über die Zweigleitung 8 in das Teilsystem 2 geführt. Die Einspeisung erfolgt dabei im statischen Durchmischer 10, so dass eine besonders homogene Verteilung des erzeugten Wasserstoffs H₂ im Hauptstrom H des Wassers W sichergestellt ist. Das mit Wasserstoff H₂ bespeiste Wasser W strömt sodann dem Wasserstoff-Sauerstoff-Rekombinationskatalysator 12 zu, wo, ausgelöst durch die Katalysatorkörper 54, eine katalytische Rekombination des Wasserstoffs H₂ mit dem im Wasser W geführten, unerwünschten Sauerstoff O₂ erfolgt. Der Wasserstoff H₂ reagiert dabei mit dem Sauerstoff O₂ unter Bildung von Wasser, so dass keine Kontamination oder Belastung des Wassers W mit anderen Reaktionsprodukten auftritt.

Das vom Wasserstoff-Sauerstoff-Rekombinationskatalysator 12 abströmende Wasser W wird mittels der weiteren Messsonde 59 auf möglicherweise verbliebenen Restsauerstoff hin untersucht. Der von der weiteren Messsonde 59 gelieferte Messwert für den Sauerstoffgehalt kann dabei zur Machführung des Stellwertgebers 32 herangezogen werden.

Der beim Betrieb der Elektrolyseeinheit 4 ebenfalls erzeugte Sauerstoff O₂ wird über das Ableitungssystem 40 zunächst vom mitgeführten Wasser W' getrennt und sodann dem Entlüftungssystem zugeführt.

Durch die bedarfsgerechte Erzeugung des Wasserstoffs H₂ und die anschließende Rekombination des Wasserstoffs H₂ mit dem im Wasser W geführten, unerwünschten Sauerstoff O₂ zu Wasser ist eine zuverlässige Verminderung des Sauerstoffgehalts im Wasser W auf besonders einfache Weise möglich. Insbesondere kann ein ursprünglicher Sauerstoffgehalt im Wasser W von beispielsweise etwa 8 ppm auf einfache und zuverlässige Weise auf einen Sauerstoffgehalt von beispielsweise weniger als etwa 10 ppm vermindert werden. Durch das Aufbereitungssystem 1 ist somit auf einfache Weise eine Korrosion im Teilsystem 2 sicher vermieden, ohne dass dazu in regelmäßigen Abständen ein vollständiger Austausch des in diesem geführten Wassers W erforderlich wäre.

## Patentansprüche

1. Aufbereitungssystem (1) zur Verminderung des Sauerstoffgehalts von in einem Teilsystem (2) einer technischen Anlage geführtem Wasser (W), bei dem einer an das Teilsystem (2) zur Zersetzung von Wasser in Wasserstoff (H₂) und Sauerstoff (O₂) angeschlossenen Anode und Kathode einer eine Anzahl von Membranelektrolysezellen (20) umfassenden Elektrolyseeinheit (4) wasserstoffseitig ein in das Teilsystem (2) geschalteter Wasserstoff-Sauerstoff-Rekombinationskatalysator (12) nachgeschaltet ist, wobei ein zur Vorgabe eines Stromstellwerts für die Elektrolyseeinheit (4) vorgesehener Stellwertgeber (32) eingangsseitig mit einer Messsonde (34) zur Ermittlung des Sauerstoffgehalts des der Elektrolyseeinheit (4) zuströmenden Wassers (W) im Teilsystem (2) verbunden ist.

2. Aufbereitungssystem (1) nach Anspruch 1, an dessen Elektrolyseeinheit (4) ein Ableitungssystem (40) für Sauerstoff (O₂) angeschlossen ist.

3. Aufbereitungssystem (1) nach Anspruch 1 oder 2, bei dem die Elektrolyseeinheit (4) in eine eingangsseitig und ausgangsseitig an das Teilsystem (2) angeschlossene Zweigleitung (8) geschaltet ist.

4. Aufbereitungssystem (1) nach Anspruch 3, bei dem die Zweigleitung (8) in einem statischen Durchmischer (10) in das Teilsystem (2) mündet.

5. Aufbereitungssystem (1) nach einem der Ansprüche 1 bis 4, bei dem dem Wasserstoff-Sauerstoff-Rekombinationskatalysator (12) im Teilsystem (2) eine weitere Messsonde (59) zur Ermittlung des Sauerstoffgehalts des Wassers (W) nachgeschaltet ist.

6. Verfahren zur Verminderung des Gehalts an Sauerstoff von in einem Teilsystem (2) einer technischen Anlage geführtem Wasser (W), **dadurch gekennzeichnet,dass** Wasser aus dem Teilsystem (2) elektrolytisch in Wasserstoff (H₂) und Sauerstoff (O₂) zersetzt wird, und dass der dabei erzeugte Wasserstoff (H₂) zur Rekombination des im Wasser (W) enthaltenen Sauerstoffs (O₂) herangezogen wird, wobei die elektrolytische Zersetzung des Wassers aus dem Teilsystem (2) anhand eines den Gehalt an Sauerstoff des der Elektrolyseeinheit (4) zuströmenden Wassers (W) charakterisierenden Messwerts gesteuert wird.

7. Verfahren nach Anspruch 6,
**dadurch gekennzeichnet, dass** Wasser (W) aus dem Teilsystem (2) abgezweigt, über eine Elektrolyseeinheit (4) geleitet und zusammen mit durch Zersetzung des Wassers erzeugtem Wasserstoff in das Teilsystem (2) rückgespeist wird, wobei in der Elektrolyseeinheit (4) soviel Wasserstoff erzeugt wird, wie zur Rekombination des im Wasser (W) des Teilsystems (4) enthaltenen und durch den Messwert charakterisierten Sauerstoffs benötigt wird.

## Claims

1. Treatment system (1) for reducing the oxygen content of water (W) that is guided in a subsystem (2) of a technical installation, in which treatment system connected downstream of and on the hydrogen side of an anode and cathode that are connected to the subsystem (2) for decomposing water into hydrogen (H₂) and oxygen (O₂) and which pertain to an electrolysis unit (4) comprising a number of electrolytic membrane cells (20) there is a hydrogen-oxygen recombination catalyst (12) which is connected to the subsystem (2), wherein a manipulated-variable valuator device (32), which is provided for predetermining a manipulated current variable value for the electrolysis unit (4), is connected, on the input side, to a measuring probe (34) for determining the oxygen content of the water (W) in the subsystem (2) flowing to the electrolysis unit (4).

2. Treatment system (1) according to claim 1, connected to the electrolysis unit (4) of which there is a diverting system (40) for oxygen (O₂).

3. Treatment system (1) according to claim 1 or 2, wherein the electrolysis unit (4) is connected into a branch line (8) which is connected to the subsystem (2) on the input side and on the output side.

4. Treatment system (1) according to claim 3, wherein the branch line (8) runs into the subsystem (2) in a static mixer (10).

5. Treatment system (1) according to one of claims 1 to 4, wherein connected downstream of the hydrogen-oxygen recombination catalyst (12) in the subsystem (2) there is a further measuring probe (59) for determining the oxygen content of the water (W).

6. Method for reducing the content of oxygen of water (W) guided in a subsystem (2) of a technical installation, **characterised in that** water from the subsystem (2) is electrolytically decomposed into hydrogen (H₂) and oxygen (O₂), and **in that** the hydrogen (H₂) thereby produced is used to recombine the oxygen (O₂) contained in the water (W), with the electrolytic decomposition of the water from the subsystem (2) being controlled with the aid of a measured value characterising the content of oxygen of the water (W) flowing to the electrolysis unit (4).

7. Method according to claim 6, **characterised in that** water (W) is branched off from the subsystem (2), conducted by way of an electrolysis unit (4) and together with hydrogen that is produced by decomposition of the water fed back into the subsystem (2), with as much hydrogen being produced in the electrolysis unit (4) as is required to recombine the oxygen that is contained in the water (W) of the subsystem (4) and **characterised by** the measured value.

## Revendications

1. Système (1) de traitement afin de diminuer la teneur en oxygène d'eau (W) envoyée dans un sous-système (2) d'une installation technique, dans lequel il est monté en aval, du côté de l'hydrogène, d'une anode et d'une cathode, raccordées au sous-système (2) pour la décomposition d'eau en hydrogène (H₂) et en oxygène (O₂), d'une unité (4) d'électrolyse comprenant un certain nombre de cellules (20) d'électrolyse à membrane un catalyseur (12) de recombinaison d'hydrogène-oxygène monté dans le sous-système (2), un générateur (32) de valeur de réglage prévu pour prescrire une valeur de réglage, du courant électrique pour l'unité (4) d'électrolyse, étant relié du côté de l'entrée à une sonte (34) de mesure, destinée à déterminer la teneur en oxygène de l'eau (W) du sous-système (2) qui arrive dans l'unité (4) d'électrolyse.

2. Système (1) de traitement suivant la revendication 1, à l'unité (4) d'électrolyse duquel est relié un système (40) d'évacuation de l'oxygène (O₂).

3. Système (1) de traitement suivant la revendication 1 ou 2, dans lequel l'unité (4) d'électrolyse est monté dans un conduit de dérivation raccordé du côté de l'entrée et du côté de la sortie au sous-système (2).

4. Système (1) de traitement suivant la revendication 3, dans lequel le conduit (8) de dérivation débouche dans un mélangeur (10) statique dans le sous-système (2).

5. Système (1) de traitement suivant l'une des revendications 1 à 4, dans lequel il est monté en aval du catalyseur (12) de recombinaison hydrogène-oxygène du sous-système (2), une autre sonde (59) de mesure destinée à déterminer la teneur en oxygène de l'eau (W).

6. Procédé de diminution de la teneur en oxygène d'eau (W) envoyée dans un sous-système d'une installation technique, **caractérisé en ce que** l'on décompose électrolytiquement l'eau provenant du sous-système (2) en hydrogène (H₂) et en oxygène (O₂) et **en ce que** l'on tire parti de l'hydrogène (H₂) produit pour la recombinaison de l'oxygène (O₂) contenue dans l'eau (W), la décomposition électrolytique de l'eau provenant du sous-système (2) étant commandée au moyen d'une valeur de mesure caractérisant la teneur en oxygène de l'eau (W) arrivant à l'unité (4) d'électrolyse.

7. Procédé suivant la revendication 6, **caractérisé en ce que** l'on dérive de l'eau (W) du sous-système (2), on l'envoie sur une unité (4) d'électrolyse et on la retourne au sous-système (2) ensemble avec l'hydrogène produit par la décomposition de l'eau, autant d'hydrogène étant produit dans l'unité d'électrolyse qu'il est nécessaire pour la recombinaison de l'oxygène contenue dans l'eau (W) du sous-système (2) et **caractérisée par** la valeur de mesure.
